# EUROPÄISCHE PATENTSCHRIFT

(11) **EP 4 057 979 B1**
(45) Veröffentlichungstag und Bekanntmachung des Hinweises auf die Patenterteilung: **07.08.2024**
(21) Anmeldenummer: 19806210.1
(22) Anmeldetag: 20.11.2019
(51) Int. Cl.: A61H 31/00

(54) **MEHRTEILIGE VORRICHTUNG**
MULTI-PART DEVICE
DISPOSITIF EN PLUSIEURS PARTIES

(30) Priorität: 14.11.2019 DE 102019130809
(43) Veröffentlichungstag der Anmeldung: 21.09.2022
(73) Patentinhaber: INOTECH Kunststofftechnik GmbH, 92507 Nabburg (DE)
(72) Erfinder: GLEIXNER, Josef, 92507 Nabburg (DE)
(74) Vertreter: Glück Kritzenberger Patentanwälte PartGmbB
(86) Internationale Anmeldenummer: PCT/EP2019/081901
(87) Internationale Veröffentlichungsnummer: WO 2021/093981

(56) Entgegenhaltungen:
- WO-A1-2016/087070
- WO-A1-2018/160709
- WO-A2-2014/071915
- US-A- 4 554 910

## Beschreibung

Die vorliegende Erfindung betrifft eine mehrteilige Vorrichtung zur kontrollierten Herz-Lungen-Reanimation bei Herzstillstand mit einem deutlich hörbaren Signal beim Erreichen einer Grenzkraft, die auf den Thorax des menschlichen Körpers einwirkt, insbesondere eine Vorrichtung, mit einer speziellen Feder- und Formgebung, was die Behandlung eines Patienten bei akuter Anwendung erleichtert.

Derartige Vorrichtungen sind aus der aus der WO 2014/071915 A2 im Stand der Technik bekannt. Diese Druckschrift offenbart eine Vorrichtung zur Herz-Lungen-Reanimation bei Herzstillstand mit mindestens einem Druckübertragungsmittel und mindestens einem Druck aufnehmenden Element und einer Druckanzeige, die bei Eintritt eines mechanischen Grenzdruckes (Fₘₐₓ) ein durch menschliche Sinnesorgane wahrnehmbares Signal erzeugt. Zwischen dem mindestens einen Druckübertragungsmittel und dem mindestens einen Druck aufnehmenden Element ist ein Federsystem mit zwei unterschiedlichen Federn angeordnet, das bei Erreichen eines vorbestimmten Grenzdruckes durch eines der beiden Federn ein hörbares erstes Click-Signal erzeugt und bei Nachlassen des Grenzdruckes ein zweites Click-Signal erzeugt. Als nachteilig an dieser Erfindung hat es sich erwiesen, dass die Übertragung des Click-Signals nicht deutlich genug ertönt, weil das erzeugte Signal eine zu hohe Dämpfung während der Übertragung nach außen erfährt.

Die DE102014014074A1 zeigt eine Vorrichtung zur kontrollierten Kardiopulmonalen-Reanimation, die in der Lage ist, eine rasche und unkomplizierte Reanimation eines menschlichen Körpers bei Herzstillstand durchführen zu können. Die geometrischen Ausmaße der erfindungsgemäßen Vorrichtung sind vergleichsweise gering und liegen etwa zwischen 10 und 25 cm im Durchmesser und ca. 6 bis 12 cm in der Höhe. In der Anwendung wird auf ein erstes Druckübertragungsmittel eine Kraft K zyklisch ausgeübt und bei Erreichen einer maximalen Kraftausübung Kₘₐₓ ein deutlich hörbares Signal erzeugt, was infolge des Zusammenwirkens von Federelementen bewirkt wird, die im Wesentlichen zwischen dem ersten Kraftübertragungsmittel und einer Basisplatte angeordnet sind.

Diese Vorrichtung zur Erzeugung eines deutlich hörbaren Geräusches bei Einwirkung einer äußeren Kraft (K) auf ein erstes Kraftübertragungsmittel ist jedoch, was den benötigten Bauraum angeht, mitunter etwas zu platzkonsumierend.

Ferner ist aus der US 4,554,910 ein weiteres Reanimationsgerät mit einer Druckanzeige bekannt geworden, das erste und zweite akustische Click-Signale mittels einer u-förmigen Blattfeder erzeugt, die etwa in der Mitte einer zweiten Feder angeordnet ist und als Wendelfeder ausgebildet ist. Als nachteilig an einem derartigen Gerät zur Herz-Lungen-Reanimation bei Herzstillstand wird es empfunden, dass der mechanische Druck stets zentral auf das Druckübertragungsmittel einwirken muss, um die gewünschte Wirkung zur Reanimation zu erzielen. Dies ist im praktischen Einsatz nicht möglich.

Ein ähnliches längliches Gerät ist aus der CN 201304070 Y bekannt geworden, das auch zwei Druckübertragungsmittel aufweist, zwischen denen eine Wendelfeder angeordnet ist und bei Erreichen eines Grenzdruckes ein hörbares Signal erzeugt und dem Anwender signalisiert, das Druckübertragungsmittel wieder zu entlasten. Als nachteilig an diesem Gerät wird es empfunden, dass es schwierig ist, im Notfall eine stabile Position auf dem Brustkorb zu erhalten.

Ferner offenbart die Druckschrift WO 2006/101400 A1 eine Vorrichtung zur manuellen Druckerzeugung auf dem Brustkorb eines menschlichen Körpers. Diese Vorrichtung weist einen mechanischen Tongenerator auf, der bei Erreichen eines vorbestimmten Druckes einen Ton erzeugt. Dazu wird eine Platte in eine Halterung gebracht, die die Platte in einer gekrümmten Vorspannung hält und beim Durchdrücken der Platte einen Ton erzeugt. Die Druckmessung selbst wird mittels eines anderen Mechanismus durchgeführt, der in der WO 2004/056303 A1 näher beschrieben wird. Als nachteilig an einer derartigen Vorrichtung zur Herz-Lungenmassage wird es empfunden, dass infolge des absoluten Funktionssicherheitserfordernisses einer derartigen Vorrichtung das Zusammenwirken aller mechanischen Komponenten zu kompliziert erscheint, so dass die gewünschte Sicherheit nicht gewährleistet werden kann.

Weiterhin ist aus der Druckschrift DE 1491611 ein tragbares Herzmassagegerät bekannt geworden, das aus einer Grundplatte und einem darüber angeordneten Stempel besteht, wobei der Stempel zyklisch mittels einer pneumatischen Mechanik betätigt wird und so auf den Thorax des menschlichen Körpers einwirkt.

Da es allgemein bei einem Herzstillstand darauf ankommt, eine Reanimation so schnell wie möglich durchzuführen, sind häufig die zur Verfügung stehenden Geräte in ihrer Handhabung zu aufwendig und kompliziert zu bedienen, so dass dadurch wertvolle Zeit zur Wiederbelebung des menschlichen Körpers verloren gehen kann, was weitreichende Folgen hat.

Daher ist es Aufgabe der vorliegenden Erfindung, die Nachteile aus dem Stand der Technik zu vermeiden und ein einfaches und leicht von Laien auf diesem Gebiet zu bedienendes Gerät zur Herz-Lungen-Reanimation bereitzustellen, das in der Lage ist, einerseits eine kontrollierte sichere Druckkraft zyklisch auf den Thorax des menschlichen Körpers einwirken zu lassen und andererseits mit einfachen Mitteln ein deutlich hörbares Signal zu erzeugen.

Diese Aufgabe wird mit den kennzeichnenden Merkmalen der Hauptansprüche gelöst. Weitere erfindungswesentliche Merkmale sind den Unteransprüchen und der Detailbeschreibung zu entnehmen.

Mit der vorliegenden Erfindung wird eine Vorrichtung zur kontrollierten Kardiopulmonalen-Reanimation vorgestellt, die in der Lage ist, eine rasche und unkomplizierte Reanimation eines menschlichen Körpers bei Herzstillstand durchführen zu können, wobei die Vorrichtung nicht nur einfach aufgebaut ist, sondern zudem auch ganz besonders platzsparend ist.

Auch hat der Erfinder erkannt, dass bisher bekannte Vorrichtungen solche Federn aufweisen, welche einer linearen Federkennlinie folgen. Auch sind Vorrichtungen bekannt, die einer degressiven Federkennlinie folgen. Beide Ausgestaltungen weisen jedoch ein mitunter hohes Anlaufmoment auf. Das kann heißen, dass der Anwender einen zu hohen Initialdruck aufbringen muss, um überhaupt eine Einfederung auslösen zu können.

Ein weiteres Ziel der vorliegenden Erfindung ist es daher, ein Anlaufmoment einstellen zu können, insbesondere sodass dieses zu anfangs möglichst gering ist und im Laufe der Druck- und Einfederbewegung progressiv immer größer wird.

Dieses Ziel kann, unter anderem, durch die Verwendung einer konischen Feder erreicht werden. Rippenbrüche des menschlichen Korpus können so ganz besonders effektiv vermieden werden, da die Rippenstruktur sich nach und nach an einen immer höher werdenden Druck anpassen und gewöhnen können.

Gemäß zumindest einer Ausführungsform wirkt die mehrteilige Vorrichtung zur Erzeugung eines deutlich hörbaren Geräusches bei Einwirkung einer äußeren Kraft auf ein erstes Kraftübertragungsmittel, das über ein Federsystem auf eine Basisplatte in einem Gerät zur kontrollierten Herz-Lungen-Reanimation des menschlichen Körpers bei Herzstillstand ein, wobei, die äußeren geometrischen Abmessungen und Formen den anatomischen Gegebenheiten des brustbeinnahe Thorax angepasst sind, insbesondere wobei das Federsystem ein Signal erzeugt, das auf mindestens ein schwingungsfähiges Element einwirkt, wobei zwischen dem ersten Kraftübertragungsmittel und der Basisplatte das Federsystem angeordnet ist, das im Wesentlichen aus mindestens einem Federelement und einem flächig ausgebildeten Federelement besteht, insbesondere weiter wobei das Federelement ein konisches Federelement ist.

Gemäß zumindest einer Ausführungsform ist das mindestens eine Federelement seitlich von dem flächig ausgebildeten Federelement, welches insbesondere ein Knackblech ist, auf einer Kreisbahn angeordnet.

Gemäß zumindest einer Ausführungsform umfasst die Vorrichtung mindestens zwei, vorzugsweise mindestens drei und besonders bevorzugt mindestens vier, Federelemente, welche jeweils seitlich von dem flächig ausgebildeten Federelement angeordnet sind. "Seitlich angeordnet" kann im Zusammenhang der vorliegenden Erfindung eine Anordnung der Federelemente in einer Richtung senkrecht zur Einfederrichtung des flächig ausgebildeten Federelementes heißen. Die Kreisbahn verläuft daher vorzugsweise entlang und innerhalb einer zu der Einfederrichtung des flächig ausgebildeten Federelementes senkrecht stehenden Ebene. Gemäß zumindest einer Ausführungsform der mehrteiligen Vorrichtung ist jedes der Federelemente ein konisches Federelement.

Durch Verwendung eines konischen Federelementes kann ein Anlaufmoment eingestellt werden, sodass dieses zu anfangs möglichst gering ist und im Laufe der Druck- und Einfederbewegung progressiv immer größer wird.

Rippenbrüche des menschlichen Korpus können so ganz besonders effektiv vermieden werden, da die Rippenstruktur sich nach und nach an einen immer höher werdenden Druck anpassen und gewöhnen können. Gemäß zumindest einer Ausführungsform der mehrteiligen Vorrichtung ist zumindest ein Federelement derart konisch zwischen dem ersten Kraftübertragungsmittel und der Basisplatte angeordnet, dass ein Federquerschnitt des Federelements ausgehend von dem Kraftübertragungsmittels in Richtung hin zu der Basisplatte sich konisch vergrößert oder verkleinert. Dies ermöglicht insbesondere auch in horizontaler Richtung (innerhalb welcher die Kreisbahn verlaufen kann) eine besonders effektive Verkleinerung des Bauraums.

Gemäß zumindest einer Ausführungsform weist die mehrteilige Vorrichtung lediglich ein einziges Federelement auf, wobei in radialer Richtung ein mit der Basisplatte verbundenes Ende des Federelementes das flächig ausgebildete Federelement in radialer Richtung einfasst und umrandet. Vorzugsweise ist dieses Federelement entlang einer Einfederachse des flächig ausgebildeten Federelements derart angeordnet, dass in horizontaler Richtung ein Federquerschnitt dieses Federelementes das flächig ausgebildete Federelement vollständig einfasst. Vorzugsweise sind die Einfederachsen beider Federelemente dann vollständig überlappend und damit parallel zueinander angeordnet. Mit anderen Worten fasst damit das Federelement das flächig ausgebildete Federelement in horizontaler Richtung ein. Ein Federquerschnitt des einzigen Federelementes ist damit zumindest stellenweise größer als ein Federquerschnitt des flächig ausgebildeten Federelementes, sodass das flächig ausgebildete Federelement in den Federquerschnitt des einzigen Federelements eingepasst ist. Ein mit der Basisplatte verbundenes Ende des einzigen Federelementes ist daher größer, als ein Federquerschnitt des flächig ausgebildeten Federelementes. Dabei bezeichnet ein Federquerschnitt einer Feder in diesem Zusammenhang eine Ausdehnung der Feder in einer zur Einfederrichtung senkrecht stehenden Richtung. Das einzige Federelement bildet daher ein zentrales Federelement. Gemäß zumindest einer Ausführungsform der mehrteiligen Vorrichtung ist zwischen dem flächig ausgebildeten Federelement und dem Kraftübertragungsmittel das Federelement, welches das weitere Federelement ist, angeordnet, sodass ein von außen auf das Kraftübertragungsmittel aufgebrachter Druck über das Federelement auf das flächig ausgebildete Federelement zumindest teilweise übertragen wird. Diese Ausführungsform zeigt, dass neben dem flächig ausgebildeten Federelement und dem einzigen Federelement noch zumindest ein weiteres Federelement verbaut sein kann, jedoch dann mit den oben erwähnten baulichen Einschränkungen.

Gemäß zumindest einer Ausführungsform der mehrteiligen Vorrichtung weist ein mit dem Kraftübertragungsmittel verbundenes Ende des einzigen Federelementes einen solchen radialen Querschnitt auf, dass in radialer Richtung dieses Ende das Federelement einfasst und umrandet. Wie obig beschrieben, wird dadurch das zentrale Federelement dargestellt. Das zentrale Federelement kann daher das einzige Federelement sein.

Gemäß zumindest einer Ausführungsform der mehrteiligen Vorrichtung ist abseits einer durch das flächige Federelement hindurchverlaufende Symmetrieachse in radialer Richtung die Vorrichtung frei von weiteren Federelementen.

Neben dem einzigen Federelement kann jedoch zumindest noch ein weiteres Federelement in der Vorrichtung verbaut sein, welches dann jedoch parallel und auf der Einfederachse des flächig ausgebildeten Federelements angeordnet ist und dann jedoch weder das flächig ausgebildete Federelement einfasst (wie es das einzige Federelement tut) noch abseits der Einfederachse des flächig ausgebildeten Federelementes in der Vorrichtung angeordnet ist.

Gemäß zumindest einer Ausführungsform der mehrteiligen Vorrichtung bilden die Federelemente eine Signal erzeugende Einheit oder sind zumindest ein Teil davon, sodass bei Erreichen einer vorbestimmten Durchbiegung in einer Richtung spontan ein Knackgeräusch erzeugt wird.

Des Weiteren betrifft die vorliegende Erfindung ein Verfahren zur Erzeugung eines deutlich hörbaren Geräusches, insbesondere unter Verwendung der obig beschriebenen Vorrichtung. Dabei sind alle für die hier beschriebene Vorrichtung offenbarten Merkmale ebenso auch für das hier beschriebene Verfahren offenbart und umgekehrt.

Gemäß zumindest einer Ausführungsform ist das Verfahren zur Erzeugung eines deutlich hörbaren Geräusches bei Einwirkung einer äußeren Kraft K auf ein erstes Kraftübertragungsmittel, das über ein Federsystem auf eine Basisplatte in einem Gerät zur kontrollierten Herz-Lungen-Reanimation des menschlichen Körpers bei Herzstillstand einwirkt, dadurch gekennzeichnet, dass durch das Zusammenwirken des Federsystems bei Erreichen eines einstellbaren Grenzdruckes Kₘₐₓ ein deutlich hörbares Signal erzeugt wird, das auf schwingungsfähige Elemente übertragen wird.

Dabei ist es vorteilhaft, dass ein flächiges, insbesondere einstückiges Federelement, das bei Einwirkung einer mechanischen Kraft K einen einstellbaren Grenzkraft Kₘₐₓ erkennen lässt, und bei Nachlassen der Kraft K wieder in die ursprüngliche Startposition des Federelements spontan zurückspringt, wobei sowohl beim Erreichen des Grenzwertes Kₘₐₓ als auch beim Zurücksetzen in die Startposition ein deutlich hörbares Signal ertönt, das sowohl mechanisch als auch akustisch auf die das Federelement tragende Umgebung einwirkt.

Ferner ist es vorteilhaft, dass die Signal erzeugende Einheit mindestens ein beliebig ausgebildetes Knackblech mit mindestens einer Wölbung aufweist, auf die mindestens ein schwingungsfähiges Element einwirkt.

Weiterhin ist es vorteilhaft, dass das die äußere Form des Knackblechs beliebig ausgebildet sein kann, z. B. oval, mehreckig, herzförmig, vorzugsweise rund.

Vorteilhaft ist es auch, dass das Knackblech bei Erreichen einer vorbestimmten Durchbiegung in einer Richtung spontan ein Knackgeräusch erzeugt.

Ein weiterer Vorteil ist in der Anordnung eines umfänglichen schwingungsfähigen Stegs am ersten Kraftübertragungsmittel zu sehen.

Vorteilhaft ist es ferner, dass das Knackblech beim Nachlassen der Krafteinwirkung selbständig federnd zurückspringt und koaxial zum ersten Kraftübertragungsmittel angeordnet ist.

Vorteilhaft ist es auch, dass mindestens ein Federelement seitlich zum flächigen Federelement angeordnet ist.

Ein weiterer Vorteil ist darin zu sehen, dass mindestens eine Erhebung auf der Ebene der Basisplatte mit mindestens einem Vorsprung auf der Innenseite des ersten Kraftübertragungsmittels derart zusammenwirkt, dass sie miteinander im Eingriff stehen, wobei mindestens ein Federelement unter einer vorgegebenen Vorspannung steht.

Vorteilhaft ist es ferner, dass mindestens eine Erhebung auf der Basisplatte und mindestens ein Vorsprung auf der Innenseite des ersten Kraftübertragungsmittels mindestens eine Druckfeder aufnimmt.

Eine vorteilhafte Ausbildung ist darin zu sehen, dass Erhebungen und Vorsprünge als Führungselemente ausgebildet sind, die einerseits den Hub des ersten Kraftübertragungsmittels definieren und andererseits das erste Kraftübertragungsmittels gegen Verdrehung sichern.

Vorteilhaft ist es auch, dass das flächige Knackblech lose mindestens auf drei schmalen Stützpunkten am Rand des Knackbleches aufliegt.

Ein weiterer Vorteil ist darin zu sehen, dass die seitlichen schwingungsfähigen Stege Ausnehmungen aufweisen, die unterschiedliche Ausformungen aufweisen, z. B. eckig oder bogenförmig.

Vorteilhaft ist es ferner, dass auf der Außenseite der Basisplatte ein ausgeformter Schaumstoff angeordnet ist, dessen Oberfläche ballig ausgebildet ist.

Vorteilhaft ist es auch, dass die Deckfläche des ersten Kraftübertragungsmittels konkav ausgebildet ist, wobei die Deckfläche mindestens eine Wölbung aufweisen kann.

Vorteilhaft ist es ferner, dass das Verfahren zur Erzeugung eines deutlich hörbaren Geräusches bei Einwirkung einer äußeren Kraft K auf ein erstes Kraftübertragungsmittel, das über ein Federsystem auf eine Basisplatte in einem Gerät zur kontrollierten Herz-Lungen-Reanimation des menschlichen Körpers bei Herzstillstand einwirkt, dadurch gekennzeichnet ist, dass durch das Zusammenwirken eines Federsystems bei Erreichen eines einstellbaren Grenzdruckes Kₘₐₓ ein deutlich hörbares Signal S erzeugt wird, das auf schwingungsfähige Elemente übertragen wird.

Weitere erfindungswesentliche Merkmale sind der Beschreibung und den Unteransprüchen zu entnehmen.

Im nun Folgenden wird die Erfindung anhand von Zeichnungen näher erläutert.

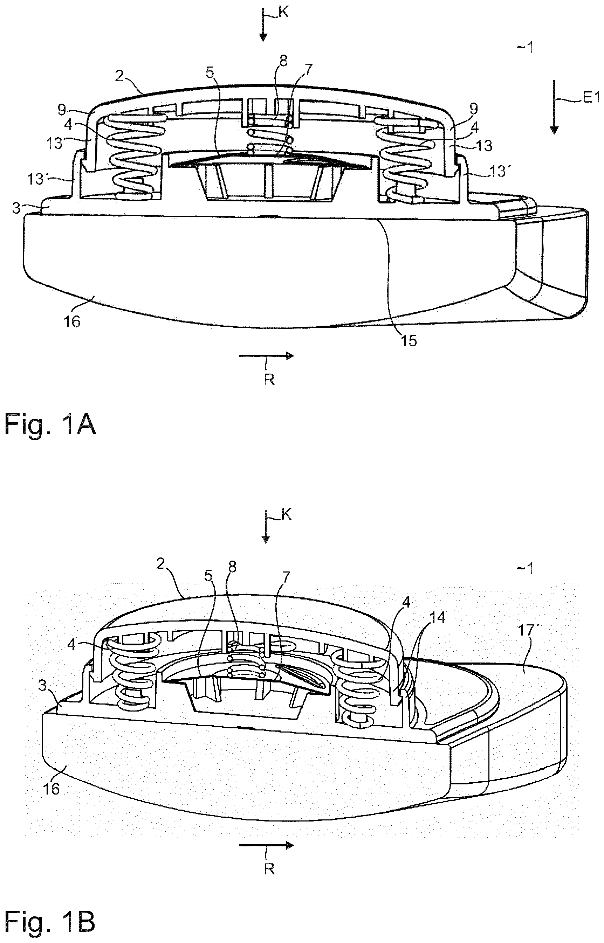

Die Figur 1A zeigt eine seitliche Schnittdarstellung eines ersten Ausführungsbeispiels der hier beschriebenen Vorrichtung.

Die Figur 1B zeigt das Ausführungsbeispiel der Figur 1A in einer schematisch perspektivischen Schnittdarstellung.

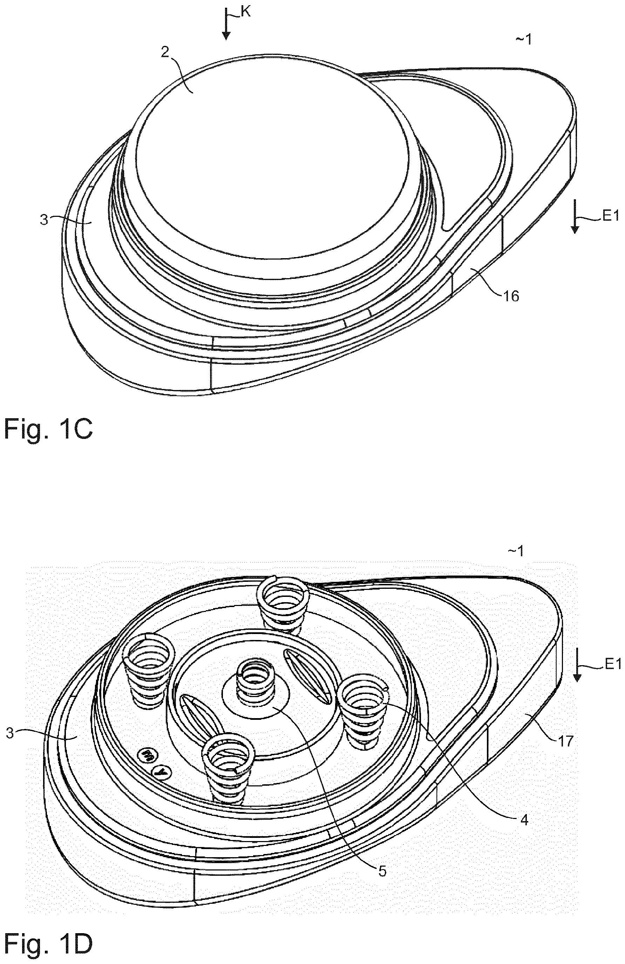

Aus den Figuren 1C und 1D ist eine Draufansicht des Ausführungsbeispiels 1A und 1B gezeigt.

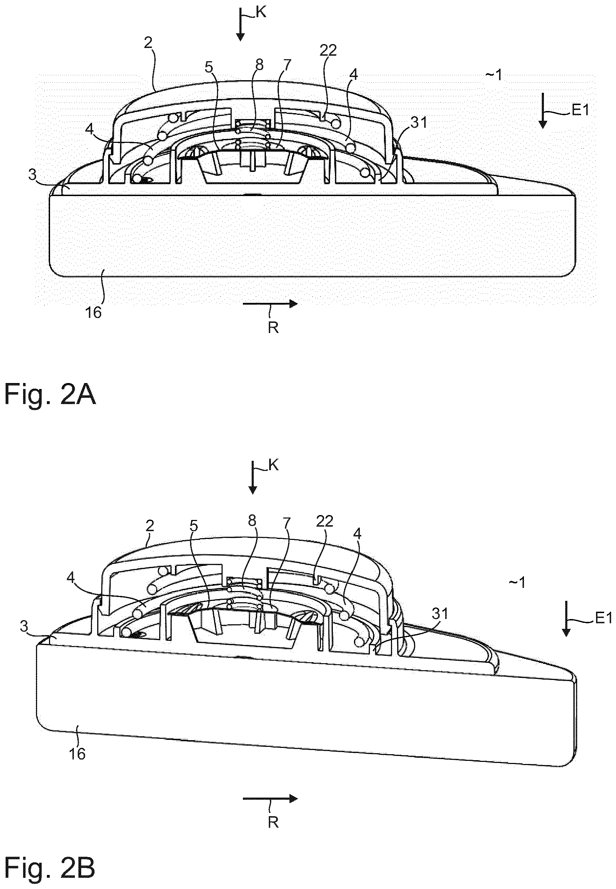

In den Figuren 2A und 2B ist ein weiteres Ausführungsbeispiel in schematisch perspektivischer Seitenansicht gezeigt.

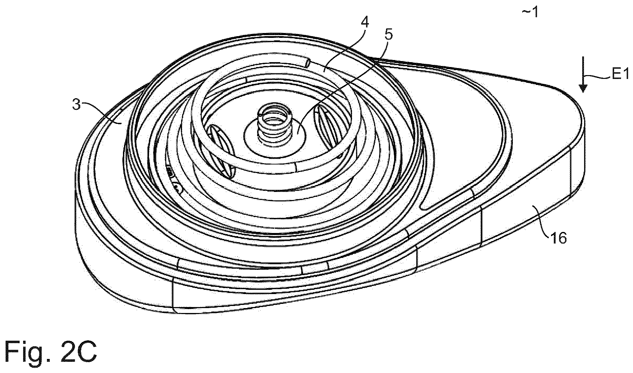

Die Figur 2C stellt dieses weitere Ausführungsbeispiel der Figuren 2A und 2B in der Draufansicht dar.

Im Unterschied zu dem Ausführungsbeispiel der Figuren 1A-1D ist in den Figuren 2 nur eine einzige, zentrale, Feder zu erkennen.

In der Figur 1A ist ein erstes Ausführungsbeispiel einer hier beschriebenen Vorrichtung 1 gezeigt.

insbesondere ist erkennbar, dass die Mehrteilige Vorrichtung 1 zur Erzeugung eines deutlich hörbaren Geräusches bei Einwirkung einer äußeren Kraft (K) auf ein erstes Kraftübertragungsmittel 2, das über ein Federsystem 4, 5, 8 auf eine Basisplatte 3 in einem Gerät zur kontrollierten Herz-Lungen-Reanimation des menschlichen Körpers bei Herzstillstand einwirkt, derart ausgestaltet, dass die äußeren geometrischen Abmessungen und Formen den anatomischen Gegebenheiten des brustbeinnahen Thorax angepasst sind, insbesondere wobei das Federsystem 4, 5, 8 ein Signal erzeugt, das auf mindestens ein schwingungsfähiges Element 8 einwirkt, wobei zwischen dem ersten Kraftübertragungsmittel 2 und der Basisplatte 3 das Federsystem 4, 5 angeordnet ist, das im Wesentlichen aus mindestens einem Federelement 4 und einem flächig ausgebildeten Federelement 5 besteht, weiter wobei das Federelement 4 ein konisches Federelement ist.

Genauer gesagt, sind entlang einer Kreisbahn insgesamt vier Federelemente 4 seitlich vom dem flächig ausgebildeten Federelement 5, welches insbesondere ein Knackblech 5 ist, auf einer Kreisbahn angeordnet. Jedes der Federelemente 4 ist konisch ausgebildet.

Des Weiteren sind alle Federelemente 4 derart konisch zwischen dem ersten Kraftübertragungsmittel 2 und der Basisplatte 3 angeordnet, dass ein Federquerschnitt des Federelements 4 ausgehend von dem Kraftübertragungsmittels 2 in Richtung hin zu der Basisplatte 3 sich konisch verkleinert.

Daneben ist zwischen dem flächig ausgebildeten Federelement 5 und dem Kraftübertragungsmittel 2 das Federelement 8, welches ein weiteres Federelement 8 ist, angeordnet, sodass ein von außen auf das Kraftübertragungsmittel 2 aufgebrachter Druck über das Federelement 8 auf das flächig ausgebildete Federelement 5 zumindest teilweise übertragen wird.

Die Figuren 1B bis 1D zeigen in schematisch perspektivischen Ansichten die in der Figur 1A gezeigte Vorrichtung.

Die auf das erste Kraftübertragungsmittel 2 auszuübende Kraft K liegt in der Regel zwischen 35 und 45 kg, vorzugsweise bei ca. 40 kg, die notwendig ist, um bei der Reanimation der Herz-Lungentätigkeit wirksam eingesetzt zu werden. In einem bevorzugten Ausführungsbeispiel handelt es sich um vier Wendelfedern 4, die um das Knackblech 5 herum, auf einer vorgegeben Kreisbahn, angeordnet sind. Die Federkonstante oder Federrate R des Federelements 4 kann bei etwa 8.861 N/mm liegen. Die Wendelfeder 4 ist an den oberen und unteren Auflagen angeschliffen, um eine definierte Auflagefläche auf der Basisplatte 3 und dem ersten Kraftübertragungsmittel 2 zu erhalten.

Der Durchmesser der Kreisbahn, auf der die Federelemente 4 angeordnet sind, sollte 100 mm nicht übersteigen, um die geometrischen Ausmaße der gesamten Vorrichtung nicht zu groß zu gestalten, was im Wesentlichen durch die anatomischen Abmessungen des Thorax des menschlichen Körpers und die Betriebssicherheit bestimmt ist.

Der Durchmesser des flächigen Knackblechs 5 liegt etwa zwischen 30 mm und 55 mm und liegt quasi punktförmig mit seinem Randbereich 22 am Umfang auf mindestens drei Stützpunkten 10 auf, die sich aus der Ebene der Basisplatte 3 erheben.

Das Knackblech 5 weist im mittleren Bereich mindestens eine Wölbung 7 auf, auf deren oberen Punkt mindestens ein zweites schwingungsfähiges Element 8, also das weitere Federelement 8, mit seinem einen Ende angeordnet ist.

Das andere Ende stützt sich kraftschlüssig an der Unterseite des ersten Kraftübertragungsmittels 2 ab.

Das erste Kraftübertragungsmittel 2 ist im Querschnitt nahezu u-förmig ausgebildet, sodass die beiden Schenkel des u-förmigen Querschnitts, bzw. Erhebungen aus der Ebene der Unterseite des ersten Kraftübertragungsmittels 2, als mindestens ein, insbesondere akustisch, schwingungsfähiges Teil 8 (siehe weiter unten) ausgebildet ist, das die von dem Knackblech 5 erzeugten Schallwellen aufnimmt und nach außen überträgt.

Die zwischen der Basisplatte 3 und dem ersten Kraftübertragungsmittel 2 angeordneten Federelemente 4, 5, 8 weisen im zusammengebauten Zustand alle eine bestimmte Vorspannung auf, die dadurch erzeugt wird, dass das erste Kraftübertragungsmittel 2 und die Basisplatte 3 jeweils eine Erhebung 13, 13' mit einem Schnappverschluss 14 am Ende der Erhebung aufweisen. Der Schnappverschluss 14 kann ferner eine Führung mit einem längsgerichteten Freiheitsgrad aufweisen, in der sich der Haken der Erhebung 13 bewegt.

Beim Zusammenführen des ersten Kraftübertragungsmittels 2 und der Basisplatte 3 verhaken sich die beiden Enden der jeweiligen Erhebungen bis zu einem vorbestimmten Anschlag ineinander, so dass die einzelnen Federelemente 4, 5, 8 im zusammengebauten Zustand alle eine gewisse vorbestimmte Vorspannung aufweisen, die letztlich infolge des Zusammenwirkens zwischen den einzelnen Federelementen eine resultierende Druckkraft von ca. 40 kg aufweisen, die notwendig ist, um das Knackblech 5 an den Grenzwert zum "Durchbruch" des Knackbleches 5 zu führen, bei dem es ein deutlich wahrnehmbares Geräusch erzeugt, das sich im Wesentlichen auf die seitlichen schwingungsfähigen Teile am ersten Kraftübertragungsmittel 2 überträgt und durch Modulation der Schallwellen an den schwingungsfähigen Teilen 9, gelangenden Schallwellen infolge von Überlagerungen der verschiedenen Wellenbereiche im hörbaren Bereich verstärkt wird, sodass im Ergebnis ein deutlich hörbares Signal beim Erreichen der vorbestimmten Kraft Kₘₐₓ von etwa 40 kg ertönt. Bei Rücknahme der ausgeübten Kraft K auf das erste Kraftübertragungsmittel 2 springt das Knackblech 5 bzw. Signal erzeugende Einheit 5 selbsttätig unter Abgabe eines weiteren Signals in seine Ausgangsposition zurück

An einer unteren Seite 15 der Basisplatte 3 ist ein ausgeformtes Teil 16 angeordnet. Das ausgeformte Teil 16 besteht aus einem geeigneten Schaumstoff, wie beispielsweise einem Moosgummi, das einerseits eine federnde Wirkung entfaltet und andererseits feuchtigkeitsaufnehmend ist und infolge seiner Stoffeigenschaften und Porengröße auf der nackten Haut eine bestimmte Haftfähigkeit entwickelt, was sich bei der Behandlung des Patienten besonders günstig auswirkt.

Aufgrund der federnden Wirkung des Schaumstoffes des ausgeformten Teils 16 ist diese Federkraft mit in die Berechnung der Gesamtkraft von ca. 40 kg zum Erzeugen des ersten hörbaren Signals einzubeziehen. Die auf der nackten Haut des Patienten aufliegende Oberfläche des ausgeformten Teils 16 ist der Anatomie des Thorax im Bereich des Brustbeins im Wesentlichen angepasst.

Das ausgeformte Teil 16 ist in der Draufsicht birnenförmig ausgebildet, wobei das dünnere Ende 17' des Schaumstoffteils 16 bei der Behandlung des Patienten in etwa mit der Position des unteren Endes des Brustbeins übereinstimmen sollte, um bei der Reanimation des Patienten die optimale Wirkung zu entfalten.

In den Figuren 2 ist schematisch ein weiteres Ausführungsbeispiel einer hier beschriebenen Vorrichtung 1 dargestellt.

Erkennbar ist, dass im Unterschied zu den Figuren 1, die in den Figuren 2 vorgestellte Vorrichtung 1 eine einziges Federelement 4, nämlich ein einziges zentral, das flächige Federelement 5 einfassende, Federelement 4 aufweist, wobei nach wie vor, also ebenso wie in den Figuren 1, das Federelement 8 eingebaut ist.

Das zentrale Federelement 4 verjüngt sich in dessen Federquerschnittsfläche ausgehend von der Basisplatte 3 in Richtung des Kraftübertragungselementes 2.

Ein mit der Basisplatte 3 verbundenes Ende ist in einer Einfassung 31 eingepasst, sodass dieses Ende in radialer Richtung R (parallel zur horizontalen Richtung) durch die Einfassung 31 begrenzt ist und somit mechanisch stabilisiert ist. Das untere Ende des Federelementes 4 kann dadurch nicht nach außen wegrutschen oder sich in radialer Richtung R verschieben.

Das weitere Ende des Federelementes 4 ist in einer durch eine innere Einfassung 22 fixiert. Dabei ist in diesem Ausführungsbeispiel die innere Einfassung 22 innerhalb des Federquerschnitts angeordnet. Beide Einfassungen 22 und 31 folgen jedoch einer Kreisbahn, jedoch mit unterschiedlichen Radien. Insbesondere ist nämlich in diesem Ausführungsbeispiel der Radius der Kreisbahn der Einfassung 22 kleiner als der Radius der Einfassung 31. Beide Einfassungen teilen jedoch die gleiche Symmetrieachse miteinander. Dabei verläuft die Symmetrieachse senkrecht zur radialen Richtung und damit parallel zur Einfederrichtung E1 aller Federn.

Die Figuren 2B bis 2C zeigen in schematisch perspektivischen Ansichten das in der Figur 2A gezeigte Ausführungsbeispiel.

Der Umfang der Erfindung ist durch die Ansprüche definiert.

### Bezugszeichenliste

- 1: Vorrichtung
- 2: Kraftübertragungsmittel
- 3: Basisplatte
- 4: Federelement
- 5: Flächig ausgebildetes Federelement/ Knackblech/ Signal erzeugende Einheit
- 7: Wölbung
- 8: schwingungsfähiges Federelement
- 9: schwingungsfähiges Teil
- 10: Stützpunkte
- 13: Erhebung
- 13': Erhebung
- 14: Schnappverschluss
- 15: untere Seite
- 16: ausgeformtes Teil
- 17': dünnes Ende
- 22: Randbereich/ innere Einfassung
- 31: Einfassung
- R: radiale Richtung
- K: Kraft
- E1: Einfederrichtung

## Patentansprüche

1. Gerät zur kontrollierten Herz-Lungen-Reanimation des menschlichen Körpers bei Herzstillstand mit einer mehrteiligen Vorrichtung (1) zur Erzeugung eines deutlich hörbaren Geräusches, wobei die mehrteilige Vorrichtung ein erstes Kraftübertragungsmittel (2), ein Federsystem (4, 5) und eine Basisplatte (3) aufweist, wobei bei Einwirkung einer äußeren Kraft (K) auf das erste Kraftübertragungsmittel (2), das über das Federsystem (4, 5) auf die Basisplatte (3) einwirkt, ein deutlich hörbares Geräusch erzeugbar ist, wobei die äußeren geometrischen Abmessungen und Formen des Gerätes den anatomischen Gegebenheiten des brustbeinnahen Thorax angepasst sind, wobei das Federsystem (4, 5) ein Geräusch erzeugt, das auf mindestens ein schwingungsfähiges Element (8) einwirkt, **dadurch gekennzeichnet dass** zwischen dem ersten Kraftübertragungsmittel (2) und der Basisplatte (3) das Federsystem (4, 5) angeordnet ist, das im Wesentlichen aus mindestens einem ersten konischen Spiralfederelement (4) und einem flächig ausgebildeten Federelement (5) besteht.

2. Gerät nach Anspruch 1, **dadurch gekennzeichnet, dass** das erste konische Spiralfederelement (4) seitlich vom dem flächig ausgebildeten Federelement (5), welches insbesondere ein Knackblech (5) ist, auf einer Kreisbahn angeordnet ist.

3. Gerät nach Anspruch 1 oder 2, **dadurch gekennzeichnet, dass** die mehrteilige Vorrichtung (1) mindestens zwei, vorzugsweise mindestens drei und besonders bevorzugt mindestens vier konische Spiralfederelemente (4) umfasst, welche jeweils seitlich von dem flächig ausgebildeten Federelement (5) angeordnet sind.

4. Gerät nach zumindest einem der vorhergehenden Ansprüche,
**dadurch gekennzeichnet, dass** in radialer Richtung (R) senkrecht zur äußeren Kraft (K) ein mit der Basisplatte (3) verbundenes Ende des ersten konischen Spiralfederelementes (4) das flächig ausgebildete Federelement (5) einfasst und umrandet.

5. Gerät nach zumindest einem der vorhergehenden Ansprüche,
**dadurch gekennzeichnet, dass** zwischen dem flächig ausgebildeten Federelement (5) und dem ersten Kraftübertragungsmittel (2) ein weiteres Federelement angeordnet ist, sodass ein von außen auf das erste Kraftübertragungsmittel (2) aufgebrachter Druck über das weitere Federelement auf das flächig ausgebildete Federelement (5) zumindest teilweise übertragen wird.

6. Gerät nach zumindest einem der vorhergehenden Ansprüche,
**dadurch gekennzeichnet, dass** ein mit dem ersten Kraftübertragungsmittel (2) verbundenes Ende des ersten konischen Spiralfederelementes (4) einen solchen radialen Querschnitt senkrecht zur äußeren Kraft (K) aufweist, dass in radialer Richtung (R) senkrecht zur äußeren Kraft (K) dieses Ende das Federelement einfasst und
umrandet.

## Claims

1. Apparatus for the controlled heart-lung reanimation of the human body in the event of cardiac arrest, having a multi-part device (1) for generating a clearly audible sound, wherein the multi-part device comprises a first force-transfer means (2), a spring system (4, 5) and a base plate (3), wherein a clearly audible sound can be generated by an external force (K) acting on the first force-transfer means (2), which acts via the spring system (4, 5) on the base plate (3), wherein the external geometric dimensions and shapes of the apparatus are adapted to the anatomical conditions of the thorax close to the sternum, wherein the spring system (4, 5) generates a sound acting on at least one vibratory element (8), **characterized in that** the spring system (4, 5) is arranged between the first force-transfer means (2) and the base plate (3),which spring system (4, 5) essentially consists of at least one first conical coil spring element (4) and a flatly designed spring element (5).

2. Apparatus according to claim 1, **characterized in that** the first conical coil spring element (4) is arranged at the side of the flatly designed spring element (5) on a circular path, wherein the flatly designed spring element (5) particularly is a clicking plate (5).

3. Apparatus according to claim 1 or 2, **characterized in that** the multi-part device (1) comprises at least two, preferably at least three and particularly preferably at least four conical coil spring elements (4) which are in each case arranged at the side of the flatly designed spring element (5).

4. Apparatus according to at least one of the preceding claims, **characterized in that** in a radial direction (R) perpendicularly to the external force (K), one end of the first conical coil spring element (4), which is connected to the base plate (3), encloses and surrounds the flatly designed spring element (5).

5. Apparatus according to at least one of the preceding claims, **characterized in that** a further spring element is arranged between the flatly designed spring element (5) and the first force-transfer means (2), such that a pressure which is applied from outside to the first force-transfer means (2) is at least partially transferred by means of the further spring element to the flatly designed spring element (5).

6. Apparatus according to at least one of the preceding claims, **characterized in that** one end of the first conical coil spring element (4), which is connected to the first force-transfer means (2), comprises a radial cross section perpendicular to the external force (K) such that in the radial direction (R) perpendicular to the external force (K), this end encloses and surrounds the spring element.

## Revendications

1. Appareil, destiné à contrôler la réanimation coeur-poumon du corps humain en cas d'arrêt cardiaque, pourvu d'un dispositif (1) en plusieurs parties pour la génération d'un bruit nettement audible, le dispositif en plusieurs parties comportant un premier moyen de transmission de force (2), un système à ressort (4, 5) et une plaque d'embase (3), dans lequel lors de l'action d'une force extérieure (K) sur le premier moyen de transmission de force (2), qui par l'intermédiaire du système à ressorts (4, 5) agit sur la plaque d'embase (3), un bruit nettement audible peut être généré, dans lequel les dimensions géométriques extérieures et les formes de l'appareil étant adaptées à la conformation anatomique du thorax à proximité du sternum, le système à ressorts (4, 5) générant un bruit qui agit sur au moins un élément (8) susceptible de vibrer, **caractérisé en ce qu'**entre le premier moyen de transmission de force (2) et la plaque d'embase (3) est placé le système à ressorts (4, 5), qui est sensiblement constitué d'au moins un premier élément à ressort (4) hélicoïdal conique et d'un élément à ressort (5) constitué de forme plane.

2. Appareil selon la revendication 1, **caractérisé en ce que** le premier élément à ressort (4) hélicoïdal conique est placé latéralement de l'élément à ressort (5) constitué de forme plane, lequel est notamment une tôle claquante (5), sur une trajectoire circulaire.

3. Appareil selon la revendication 1 ou 2, **caractérisé en ce que** le dispositif (1) comprend au moins deux, de préférence au moins trois, et de manière particulièrement préférentielle, au moins quatre éléments à ressort (4) hélicoïdaux coniques, lesquels sont placés chacun latéralement de l'élément à ressort (5) constitué de forme plane.

4. Appareil selon au moins l'une quelconque des revendications précédentes, **caractérisé en ce que** dans la direction radiale (R) à la perpendiculaire de la force extérieure (K), une extrémité du premier élément à ressort (4) hélicoïdal conique reliée avec la plaque d'embase (3) entoure et borde l'élément à ressort (5) constitué de forme plane.

5. Appareil selon au moins l'une quelconque des revendications précédentes, **caractérisé en ce qu'**entre l'élément à ressort (5) constitué de forme plane et le premier moyen de transmission de force (2) est placé un élément à ressort additionnel, de telle sorte qu'une pression exercée par l'extérieur sur le premier moyen de transmission de force (2) soit transmise au moins partiellement par l'intermédiaire de l'élément à ressort additionnel sur l'élément à ressort (5) constitué de forme plane.

6. Appareil selon au moins l'une quelconque des revendications précédentes, **caractérisé en ce qu'**une extrémité du premier élément à ressort (4) hélicoïdal conique reliée avec le premier moyen de transmission de force présente à la perpendiculaire de la force extérieure (K) une section transversale radiale telle, que dans la direction radiale (R), à la perpendiculaire de la force extérieure (K), ladite extrémité entoure et borde l'élément à ressort.
